# EUROPÄISCHE PATENTANMELDUNG

(11) **EP 2 201 993 A1**
(43) Veröffentlichungstag der Anmeldung: **30.06.2010**
(21) Anmeldenummer: 09174783.2
(22) Anmeldetag: 02.11.2009
(51) Int. Cl.: B01D 29/96, B01D 35/30

(54) **Fluidfilter**

(30) Priorität: 16.12.2008 DE 102008062556
(71) Anmelder: Mahle International GmbH, 70376 Stuttgart (DE)
(72) Erfinder: Koball, Michael, 70565, Stuttgart (DE); Lika, Torsten, 70197, Stuttgart (DE)
(74) Vertreter: BRP Renaud & Partner

(57) **Zusammenfassung**

Die vorliegende Erfindung betrifft einen Fluidfilter (1), insbesondere einen Öl- oder Kraftstofffilter, umfassend ein Filtergehäuse, bestehend aus einem Topf und einem damit verschraubbaren, einteiligen Deckel (2), sowie ein wechselbares Filterelement (4), mit einer oberen Endscheibe (5) und einer unteren Endscheibe. Erfindungswesentlich ist dabei, dass eine Axialkräfte und Drehmomente übertragende Mitnehmereinrichtung (6) vorgesehen ist, die einander zugewandte und miteinander in Eingriff bringbare deckelseitige und endscheibenseitige Elemente (7,7') aufweist, wobei die Elemente (7) einen integralen Bestandteil des Deckels (2) bilden.

## Beschreibung

Die vorliegende Erfindung betrifft einen Fluidfilter, insbesondere einen Ölfilter, umfassend ein Filtergehäuse, bestehend aus einem Topf und einem Deckel, sowie einem wechselbaren Filterelement mit einer oberen und einer unteren Endscheibe gemäß dem Oberbegriff des Anspruchs 1.

Aus der DE 103 53 424 A1 ist ein gattungsgemäßes Fluidfilter bekannt mit einem aus einem Topf und einem damit verschraubbaren Deckel bestehenden Filtergehäuse. Innerhalb des Filtergehäuses ist dabei ein radial durchströmtes Filterelement angeordnet, welches eine obere und eine untere Endscheibe aufweist. An der oberen Endscheibe ist ein Rastelement angeordnet, welches mit einem am Deckel des Filtergehäuses angeordneten Gegenrastelement zusammenwirkt und eine axiale Verstellbewegung des Deckels beim Aufschrauben auf den Topf auf das Filterelement überträgt. In gleicher Weise wird die Axialkraft auch beim Abschrauben des Deckels vom Topf über die Rasteinrichtung auf das Filterelement übertragen. Da das Filterelement an seiner unteren Endscheibe einen Pin aufweist, welcher in einen topfseitigen Auslauf eingreift, ist die zwischen der oberen Endscheibe und dem Deckel angeordnete Rastverbindung nicht zur Übertragung von Drehmomenten in der Lage. Zum Entfernen des Filterelements vom Deckel, muss dieses leicht geneigt werden, wodurch ein nicht zu unterschätzender und zwischen dem Deckel und dem Filterelement gelegener ringförmiger Bewegungsraum erforderlich ist. Dieser Bewegungsraum ist jedoch nicht nutzbar, wodurch das Filterelement in seinem Durchmesser kleiner gehalten sein muss, als dies prinzipiell ohne die erforderliche Kippbewegung zum Entfernen des Filterelements aus dem Deckel, erforderlich wäre.

Aus der DE 103 17 500 B4 ist ein weiteres gattungsgemäßes Fluidfilter bekannt, ebenso wie aus der US 5,846,417.

Aus der WO 2008/030707 A1 ist ein Fluidfilter bekannt, bei welchem ein Deckel und eine diesem zugewandte Endscheibe eines Filterelementes eine Mitnehmereinrichtung bilden. Der Deckel ist dabei jedoch mehrteilig aufgebaut und über einen Schraubring mit einem Topf des Fluidfilters verschraubbar.

Die vorliegende Erfindung beschäftigt sich mit dem Problem, für einen Fluidfilter der gattungsgemäßen Art eine alternative Ausführungsform anzugeben, welche insbesondere eine erhöhte Filterleistung aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, zwischen einem Deckel eines Filtergehäuses eines Fluidfilters und einer oberen Endscheibe eines in diesem Filtergehäuse angeordneten Filterelements eine Axialkräfte und Drehmomente übertragende Mitnehmereinrichtung anzuordnen, welche einerseits in der Lage ist, beim Auf- bzw. Abschrauben des Deckels von einem Topf des Filtergehäuses das Filterelement sowohl zu drehen als auch in Axialrichtung zu verstellen und gleichzeitig die Anordnung eines bezüglich seines Durchmessers vergleichsweise großen Filterelements im Deckel zu erlauben, da zu einem Lösen des Filterelements vom Deckel das Filterelement lediglich leicht verdreht und dann entnommen werden kann und nicht wie bisher gekippt werden muss, um eine bisher vorgesehene Rastverbindung zu überwinden. Insbesondere das bisher erforderliche Kippen erforderte stets einen zwischen dem Deckel und dem Filterelement frei bleibenden ringförmigen Bewegungsraum, welcher de facto ungenutzt bleiben musste und welcher nun aufgrund der erfindungsgemäßen Mitnehmereinrichtung vorzugsweise vollständig vom Filterelement ausgefüllt werden kann, so dass ein größeres und dadurch auch leistungsstärkeres Filterelement innerhalb des Filtergehäuses bei gleichen äußeren Abmessungen desselben eingebaut werden kann. Die erfindungsgemäße Mitnehmereinrichtung weist dabei einander zugewandte und miteinander in Eingriff bringbare Elemente, insbesondere in der Art von Klauenelementen auf, die einerseits einen integralen Bestandteil des Deckels bilden und andererseits direkt oder indirekt an der oberen Endscheibe des Filterelements angeordnet sind. Mit der erfindungsgemäßen Mitnehmereinrichtung kann jedoch nicht nur die Leistungsfähigkeit des Fluidfilters deutlich gesteigert, sondern auch dessen Montage bzw. Demontage erheblich erleichtert werden.

Bei einer vorteilhaften Weiterbildung der erfindungsgemäßen Lösung, sind die Elemente derart ausgebildet, dass diese beim Montieren des Deckels aneinander anliegen und sich beim Abschrauben des Deckels vom Topf hintergreifen. Durch die derart ausgebildeten Elemente lassen sich sowohl beim Montieren, dass heißt beim Aufschrauben des Deckels, als auch bei dessen Abschrauben sowohl Drehmomente als auch Axialkräfte übertragen, wobei bei einem Abschrauben des Deckels stets gewährleistet ist, dass das Filterelement über die Elemente zuverlässig am Deckel des Filtergehäuses fixiert und gehalten ist. Zum Lösen des Filterelements vom Deckel muss dieses lediglich leicht, bspw. in einem Winkel von 45°, verdreht werden und kann daraufhin problemlos abgenommen werden.

Bei einer weiteren vorteilhaften Ausführungsform der erfindungsgemäßen Lösung, weisen die Elemente jeweils eine abgeschrägte axiale Stirnfläche auf, um ein stirnseitiges miteinander Verhaken zu verhindern. Besonders nachteilig wäre es, wenn nach einem Einsetzen des Filterelements in den Topf des Filtergehäuses und einem anschließenden Aufschrauben des Deckels auf den Topf die deckelseitigen und die endscheibenseitigen Elemente axial aufeinander liegen und dadurch eine funktionsgerechte Montage verhindern würden. Um dies zu verhindern, sind die axialen Stirnflächen der Elemente abgeschrägt, so dass die einzelnen Elemente selbst bei einem axialen Aufeinanderliegen durch ein Verdrehen des Deckels relativ zueinander verdreht und dadurch sicher in Eingriff gebracht werden können.

Zweckmäßig bilden die Elemente jeweils einen integralen Bestandteil des Deckels oder der oberen Endscheibe. Sowohl der Deckel als auch die Endscheibe des Filterelements sind üblicherweise aus Kunststoff, insbesondere als Kunststoffspritzgussteil, ausgebildet. Bei einer derartigen Ausbildung lassen sich die für die Mitnehmereinrichtung erforderlichen Elemente durch eine entsprechende Ausführung der Spritzgussform leicht und kostengünstig realisieren, so dass die erfindungsgemäße Mitnehmereinrichtung insgesamt kostengünstig am Markt platziert werden kann.

Alternativ hierzu ist es auch vorstellbar, dass die endscheibenseitigen Elemente Bestandteil einer Adaptereinrichtung sind, mit welcher gewöhnliche Filterelemente zum Einsatz in dem erfindungsgemäßen Fluidfilter aufrüstbar sind. Eine derartige Adaptereinrichtung ermöglicht den Einsatz herkömmlicher Filterelemente in dem erfindungsgemäßen Fluidfilter, so dass mit der Adaptereinrichtung ein wichtiges Bauteil im Zubehörmarkt erfolgreich platziert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen Deckel eines erfindungsgemäßen Fluidfilters in einer Schnittdarstellung mit einem darunter angeordneten und eine obere Endscheibe aufweisenden Filterelement, wobei die am Deckel und die an der oberen Endscheibe angeordneten Elemente einer Mitnehmereinrichtung dargestellt sind,
- Fig. 2: eine mögliche Ausführungsform unterschiedlicher Elemente an der oberen Endscheibe,
- Fig. 3: einen Ausschnitt von Deckel und Endscheibe beim Zuschrauben (3a) und Aufschrauben (3b) des Deckels,
- Fig. 4 - 7: weitere alternative Ausführungsformen.

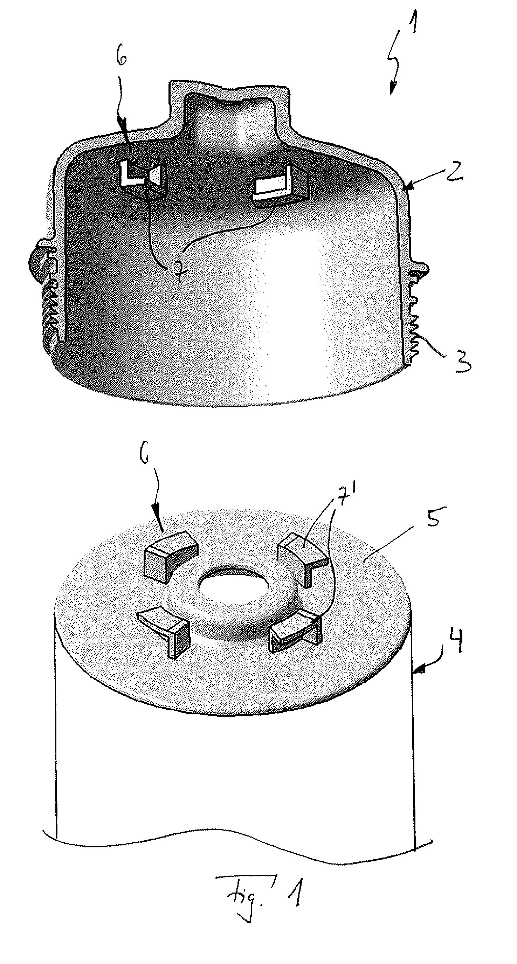

Entsprechend der Fig. 1, weist ein erfindungsgemäßes Fluidfilter 1 einen Deckel 2 auf, welcher über ein Gewinde 3 mit einem nicht gezeigten Topf eines Filtergehäuses des Fluidfilters 1 verschraubbar ist. Zumindest teilweise innerhalb des Deckels 2 ist bei vollständig montiertem Fluidfilter 1 ein Filterelement 4 angeordnet, welches üblicherweise radial durchströmt ist und eine obere Endscheibe 5 sowie eine nicht gezeigte untere Endscheibe besitzt. Das Filterelement 4 muss dabei aufgrund von Verschmutzungen turnusmäßig aus dem Filtergehäuse des Fluidfilters 1 entnommen und ausgewechselt werden. Erfindungsgemäß ist nun eine Axialkräfte und Drehmomente übertragende Mitnehmereinrichtung 6 vorgesehen, die teilweise an der oberen Endscheibe 5 und teilweise im Deckel 2 angeordnet ist und die zugewandte und miteinander in Eingriff bringbare deckelseitige und endscheibenseitige Elemente 7, 7' aufweist. Dabei bilden die deckelseitigen Elemente 7 einen integralen Bestandteil des Deckels 2 und sind immer passend zu den endscheibenseitigen Elementen 7' und zwar dergestalt dass sie beim Aufschrauben ineinander greifen, so wie z.B. Haken und Öse. Die endscheibenseitigen Elemente 7' können dabei einen integralen Bestandteil der Endscheibe 5 oder an einer Adaptereinrichtung vorgesehen werden.

Gemäß der Fig. 1 weist dabei der an der oberen Endscheibe 5 angeordnete Teil der Mitnehmereinrichtung 6 insgesamt vier Elemente 7' auf, welche im Wesentlichen in einem rechten Winkel zueinander angeordnet sind. Es sind mindestens 2 dieser Elemente 7 notwendig damit das Filterelement 4 mit Hilfe dieser Elemente 7 aus dem Filtergehäuse entnommen werden kann, es können aber auch sechs oder mehr vorgesehen werden. Optimal sind drei bzw. vier, da sich dann die einzelnen Elemente 7, 7' nicht gegenseitig behindern.

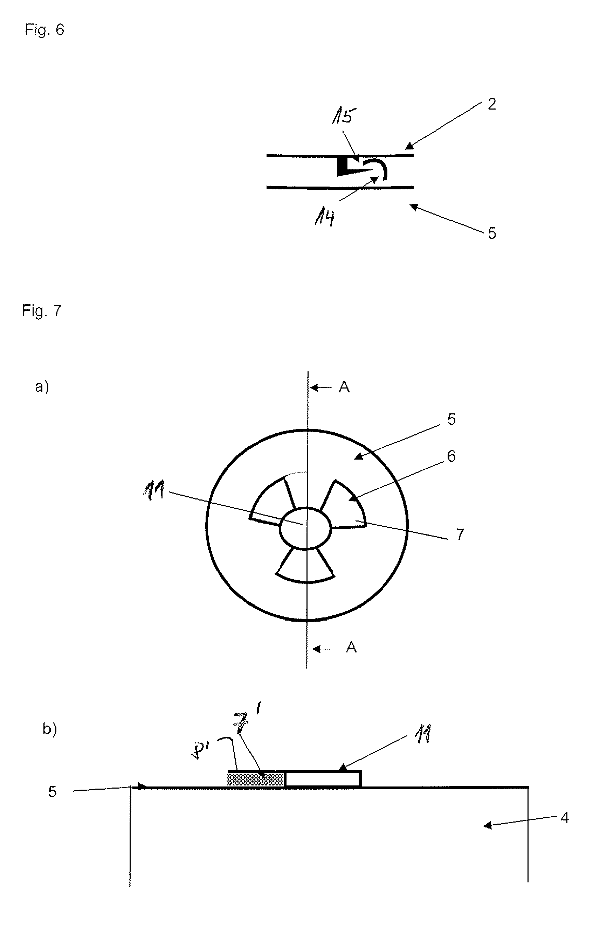

Generell sind dabei sowohl die deckelseitigen Elemente 7 als auch die endscheibenseitigen Elemente 7' derart ausgebildet, dass diese beim Montieren des Deckels 2 auf dem Topf des Filtergehäuses, dass heißt bei einem Aufschrauben des Deckels 2 auf den Topf an Elementseitenflächen aneinander anliegen und sich beim Abschrauben des Deckels 2 vom Topf an Greifflächen ineinander verhaken bzw. hintergreifen. Hierzu sind die deckelseitigen Elemente 7 nach radial innen offen ausgebildet, während die endscheibenseitigen Elemente 7' nach radial außen offen ausgebildet sind. Selbstverständlich ist dabei auch eine umgekehrte Anordnung bzw. Ausbildung denkbar. Vorgesehene Innen- bzw. Außenflächen dienen der Stabilisierung der Elemente 7, 7', sowohl beim Zuschrauben als auch beim Aufschrauben des Filtergehäuses. Gemäß der Fig. 7, ist in der Endscheibe 5 ist eine Auswölbung 11 zu erkennen, diese kann je nach Verwendung des Filterelementes 4 offen oder geschlossen sein. In einigen Anwendungsfällen kann die Endscheibe 5 auch eben sein.

Die erfindungsgemäße Mitnehmereinrichtung 6 ermöglicht einerseits eine vereinfachte Montage bzw. Demontage des Filterelements 4, da dieses zum Entnehmen aus dem Deckel 2 lediglich geringfügig verdreht werden muss, bis sich die Elemente 7 und 7' nicht mehr hintergreifen und andererseits eine erhöhte Filterleistung des Filterelements 4, da dieses bezüglich seines Durchmessers größer als bisher eingesetzte Filterelemente ausgebildet werden kann, da ein bisher unerlässlicher, zwischen dem Deckel 2 und dem Filterelement 4 erforderlicher, ringförmiger Bewegungsraum nun nicht mehr vorgesehen werden muss. Das Filterelement 4 kann somit einen größeren Durchmesser aufweisen, wodurch eine größere Filterfläche zur Verfügung steht und wodurch eine erhöhte Filterleistung erzielbar ist.

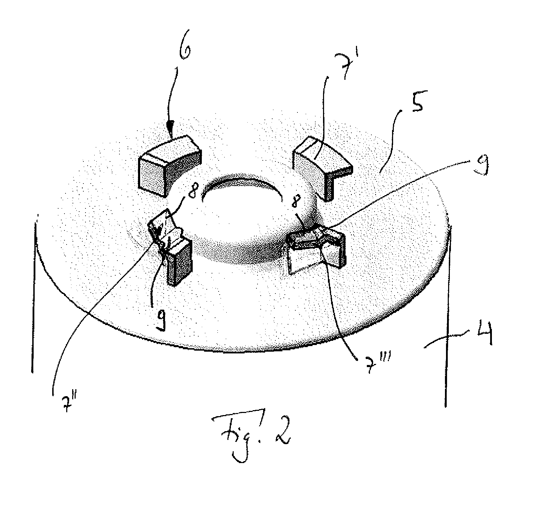

Betrachtet man die Fig. 1 und 2, so kann man erkennen, dass die einzelnen Elemente 7, 7' jeweils auf einem gleichen Radius angeordnet sind.
Im einfachsten Ausführungsbeispiel gemäß der Fig. 1 sind die einzelnen Flächen der Elemente 7,7' orthogonal zueinander ausgebildet.

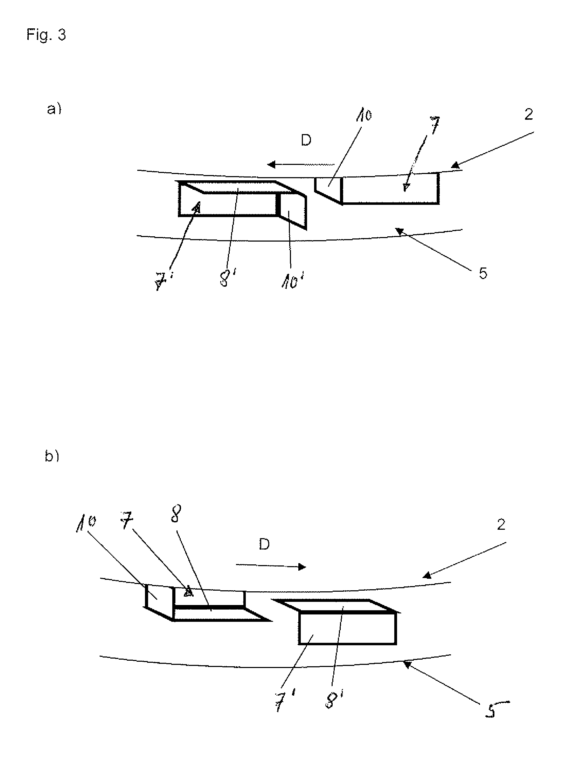

Bei einer alternativen Ausführungsform haben die Elemente 7" und 7"' gemäß der Fig. 2 eine abgeschrägte axiale Greiffläche 8, um ein stirnseitiges miteinander Verhaken beim Montieren des Fluidfilters 1 vermeiden zu können. Dies ist im Vergleich zu ebenen Greifflächen 8, wie sie bspw. in etwa bei den Elementen 7' dargestellt sind von großem Vorteil, da bei einem Aufschrauben des Deckels 2 auf dem Topf selbst bei einem axialen Aufeinanderliegen der Elemente 7 und 7' diese nicht in diesem Zustand verbleiben, sondern aufgrund der abgeschrägten Greiffläche 8 aneinander gleiten, bis die Elemente 7 umfangsmäßig versetzt zwischen den Elementen 7' zu liegen kommen. Siehe hierzu auch Fig. 3,4 und 5.

In der Fig. 2 ist noch eine weitere Alternative gezeigt. Es handelt sich um schräge Greifflächen 8 mit einem kleinen Rastmittel 9, das eine Entsprechung in der Greiffläche des Deckels 2 hat.

In der Fig. 3a ist gezeigt, wie Seitenflächen 10 und 10'der beiden Mitnehmereinrichtung 6 zusammenwirken, wenn der Deckel 2 auf das Filtergehäuse aufgeschraubt wird. Der in Drehrichtung D bewegte Deckel 2 schiebt mit seiner Seitenfläche 10' die Seitenfläche 10 der Endscheibe 5. Dadurch wird das Filterlement 4 mitgenommen und durch den Deckel 2 in das Filtergehäuse eingedrückt. Dargestellt ist der Übersichtlichkeit halber nur der Ausschnitt des Deckels 2 an dem sich die Mitnehmereinrichtung 6 befindet.

Beim Abschrauben des Deckels 2 vom Filtergehäuse, wie dies in Fig. 3b dargestellt ist, soll das Filterelement 4 vom Deckel 2 mit heraus genommen werden. Dies wird dadurch erreicht, dass die Mitnehmereinrichtung 6, die sich am Deckel 2 befindet, in Drehrichtung D mitbewegt und in die Mitnehmereinrichtung 6 der Endscheibe 5 eingreift. Die beiden Greifflächen 8 und 8' liegen beim weiteren Abschrauben des Deckels 2 aneinander an und somit wird das Filterelement 4 langsam aus dem Filtergehäuse mit entnommen. Aufgrund der Reibung zwischen den beiden Greifflächen 8 und 8'bleibt es am Deckel 2 hängen. Die Seitenflächen 10, 10' bilden hier nun eine Art Anschlag für die Mitnehmereinrichtungen 6.

Da das Filterelement 4 im Filtergehäuse bedingt drehbar gelagert ist, dreht es sich nun mit. Die Seitenflächen 10,10' sind hier notwendig, da das Filterelement 4 aufgrund einer Dichtungswirkung an der anderen Endscheibe im Filtergehäuse an einem Dom oder Ähnlichen dicht anliegen kann. Die Mitnehmereinrichtung 6 muss so stabil ausgebildet sein, dass sie diese Dichtwirkung überwinden können, ohne abzubrechen.

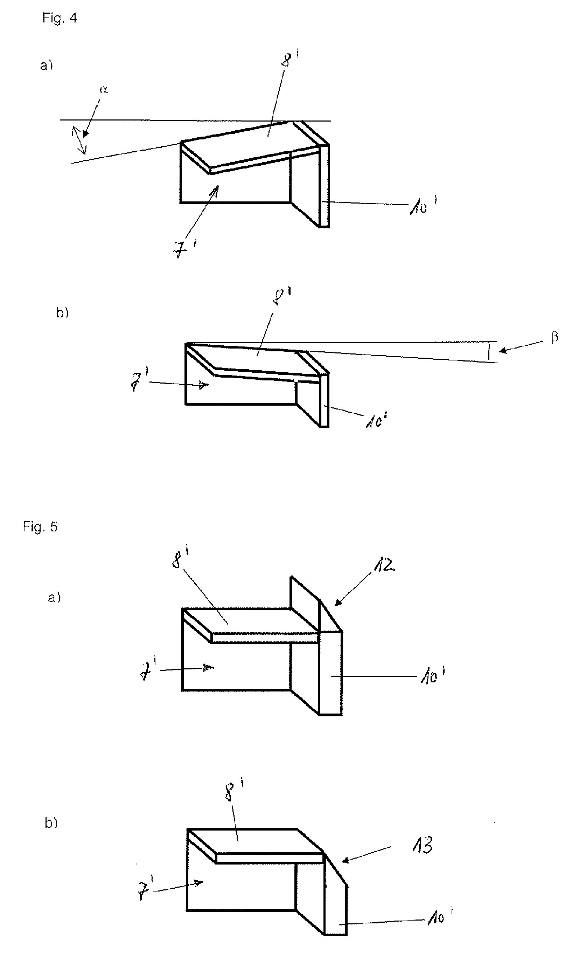

In den Figuren 4 und 5 sind weitere Ausführungsbeispiele skizziert. In Fig. 4 a) weist die Greiffläche 8 eine einfache Schräge auf, die um einen Winkel α gegen die Ebene der Endscheibe 5 abgeschrägt ist. Dadurch können die Elemente 7,7' leichter beim Zusammensetzen aneinander abgleiten. Die Gefahr dass die Elemente 7,7' beim Zuschrauben des Deckel 2 gequetscht werden, kann dadurch verringert werden. In Fig. 4b) ist das gleiche nur mit einer andersrum geneigten Greiffläche 8 dargestellt. Es besteht auch die Möglichkeit sowohl in radialer, als auch in Kreisumfangsrichtung eine Schräge vorzusehen (nicht gezeigt).

Fig. 5a) skizziert die Möglichkeit einen abgeschrägten Vorsprung 12 oberhalb der Mitnehmereinrichtung 6 als Verlängerung der Seitenfläche 10 vorzusehen. Alternativ dazu ist in Fig. 5b) skizziert, dass die Seitenfläche 10 selbst mit einer Schräge 13 versehen werden kann. Diese in Fig. 4 und 5 skizzierten Alternativen müssen an den jeweiligen Anwendungsfall adaptiert werden. Die Schräge 13 der Greiffläche 8 muss so gewählt werden, dass die Reibung zwischen den beiden Greifflächen 8 und 8'beim Abschrauben des Deckels 2 immer noch groß genug ist, so dass das Filterelement 4 mit entnommen werden kann. Anderseits muss die Schräge 13 oder der Vorsprung 12 dem Gewinde des Filtergehäuses angepasst werden. Die Beispiele aus den Fig. 4 und 5 sowie 1 und 2 können jeder Zeit miteinander kombiniert werden.

Ein weiteres alternatives Ausführungsbeispiel ist in der Fig. 6 skizziert. In diesem Fall handelt es sich um eine Art Haken und Ösen für die Mitnehmereinrichtung 6. Hierbei sind an der Endscheibe 5 mindestens zwei Ösen 14 angeformt. Am Deckel 2 sind jeweils passend dazu Haken 15 vorgesehen.
Damit die Mitnehmereinrichtung 6 funktioniert, muss der Haken 15 eine gewisse Breite aufweisen und die Dicke der Öse 14 darf nicht zu gering gewählt werden. Eventuell ist es notwendig am Haken 15 noch ein Rastmittel vorzusehen, in das die Öse 14 einrastet (nicht gezeigt). Die Öse 14 kann auch viertelkugelförmig sein, so dass der ebenfalls gerundete Haken 15 beim Zuschrauben des Deckels 2 an der Kugeloberfläche abgleitet und somit Haken15 und Öse 14 nicht gequetscht werden.

In der Fig. 7 a) und b) ist ein weiteres alternatives Ausführungsbeispiel aufgeführt. Aus der Fig. 1 ist die Auswölbung 11 der Endscheibe 5 auch in einem anderen Ausführungsbeispiel zu sehen. Für die Lösung in Fig. 7 ist die Auswölbung 11 allerdings noch mit mindestens zwei Elementen 7 versehen. Sie sind ähnlich aufgebaut wie die aus Fig. 1, bilden jedoch einen integralen Bestandteil derselben. die Greiffläche 8 geht in die Auswölbung 11 nahtlos über. Auch hier ist als Anschlag die Seitenfläche 10 vorgesehen. Der Deckel 2 muss passend dazu mindestens eine Mitnehmereinrichtung 6 aufweisen. Falls keine Auswölbung 11 an der Endscheibe 5 vorgesehen ist, sind die Elemente 7 der Mitnehmereinrichtung 6 am inneren Rand der Endscheibe 5 vorgesehen, wenn diese eine Öffnung statt der Auswölbung 11 aufweist. Falls die Endscheibe 5 geschlossen und eben ist kann die Mitnehmereinrichtung 6 auch in der Mitte der Endscheibe 5 angeordnet sein.

Optimal für alle Ausführungsbeispiele ist jedoch eine Anordnung der Mitnehmereinrichtung 6 möglichst am radialen äußeren Rand der Endscheibe 5, da dort das größte Drehmoment herrscht und es somit leichter ist, die Dichtwirkung der anderen Endscheibe im Filtergehäuse zu überwinden.

Generell können dabei die Elemente 7, 7' jeweils einen integralen Bestandteil des Deckels 2 oder der oberen Endscheibe 5 bilden, wobei auch denkbar ist, dass die endscheibenseitigen Elemente 7' Bestandteil einer nicht gezeigten Adaptereinrichtung sind, mit welcher gewöhnliche Filterelemente zum Einsatz in dem erfindungsgemäßen Fluidfilter 1 nachrüstbar sind. Insbesondere eine derartige Adaptereinrichtung ermöglicht es nicht nur speziell für das erfindungsgemäße Fluidfilter 1 entworfene Filterelemente 4 zu verwenden, sondern bereits am Markt platzierte Filterelemente derart nachzurüsten, dass diese im erfindungsgemäßen Fluidfilter 1 verwendet werden können. Das Fluidfilter 1 ist dabei üblicherweise als Öl- oder Kraftstofffilter ausgebildet, wobei generell jegliche Arten von Fluiden gefiltert werden können. Diese Verbindung von Deckel 2 und Endscheibe 5 kann auch bei Luftfiltern mit einem runden Filterelement 4, die ähnlich wie die Fluidfilter aufgebaut sind, verwendet werden.

## Patentansprüche

1. Fluidfilter (1), insbesondere ein Öl- oder Kraftstofffilter, umfassend ein Filtergehäuse, bestehend aus einem Topf und einem damit verschraubbaren, einteiligen Deckel (2), sowie ein wechselbares Filterelement (4), mit einer oberen Endscheibe (5) und einer unteren Endscheibe,
**dadurch gekennzeichnet,**
**dass** eine Axialkräfte und Drehmomente übertragende Mitnehmereinrichtung (6) vorgesehen ist, die einander zugewandte und miteinander in Eingriff bringbare deckelseitige und endscheibenseitige Elemente (7,7') aufweist, wobei die Elemente (7) einen integralen Bestandteil des Deckels (2) bilden.

2. Fluidfilter nach Anspruch 1,
**dadurch gekennzeichnet,**
**dass** deckelseitig und an der oberen Endscheibe (5) jeweils vier Elemente (7) vorgesehen sind.

3. Fluidfilter nach Anspruch 1 oder 2,
**dadurch gekennzeichnet,**
**dass** die Elemente (7) derart ausgebildet sind, dass diese beim Montieren des Deckels (2) auf dem Top des Filtergehäuses aneinander anliegen und sich beim Abschrauben hintergreifen.

4. Fluidfilter nach einem der Ansprüche 1 bis 3,
**dadurch gekennzeichnet,**
**dass** die deckelseitigen Elemente (7) nach radial innen offen ausgebildet sind, während die endscheibenseitigen Elemente (7') nach radial außen offen ausgebildet sind, oder umgekehrt.

5. Fluidfilter nach einem der Ansprüche 1 bis 4,
**dadurch gekennzeichnet,**
**dass** die deckelseitigen und die endscheibenseitigen Elemente (7,7') jeweils auf einem gleichen Radius angeordnet sind.

6. Fluidfilter nach einem der Ansprüche 1 bis 5,
**dadurch gekennzeichnet,**
**dass** die Elemente (7,7') eine abgeschrägte axiale Stirnfläche (8) aufweisen, um ein stirnseitiges miteinander Verhaken zu verhindern.

7. Fluidfilter nach einem der Ansprüche 1 bis 6,
**dadurch gekennzeichnet,**
**dass** die endscheibenseitigen Elemente (7') Bestandteil einer Adaptereinrichtung sind, mit welcher gewöhnliche Filterelemente zum Einsatz in dem Fluidfilter (1) nachrüstbar sind.
